# FASCICULE DE BREVET EUROPEEN

(11) **EP 1 253 055 B1**
(45) Date de publication et mention de la délivrance du brevet: **12.11.2008**
(21) Numéro de dépôt: 02291011.1
(22) Date de dépôt: 22.04.2002
(51) Int. Cl.: B60T 13/22, B60T 13/68

(54) **Circuit hydraulique ayant un moteur hydraulique équipé d'un frein pour un véhicule apte à être remorqué**
Hydraulikkreislauf mit einem Hydraulikmotor versehen mit einer Bremse für ein Fahrzeug, geeignet um geschleppt zu werden
Hydraulic circuit comprising a hydraulic motor provided with a brake for a vehicle suitable to be towed

(30) Priorité: 23.04.2001 FR 0105424
(43) Date de publication de la demande: 30.10.2002
(73) Titulaire: POCLAIN HYDRAULICS INDUSTRIE, 60411 Verberie (FR)
(72) Inventeur: Bigo, Louis, 60200 Compiegne (FR); Mangano, Alain, 60350 Vieux Moulin (FR); Raisin, Jean-Philippe, 60800 Crepy en Valois (FR); Ruzicka, Daniel, 60180 Nogent sur Oise (FR)
(74) Mandataire: Intes, Didier Gérard André

(56) Documents cités:
- US-A- 4 317 331
- US-A- 4 495 767

## Description

La présente invention concerne un circuit hydraulique pour la transmission hydrostatique d'un véhicule comprenant au moins un moteur hydraulique, deux conduites principales, respectivement d'alimentation et d'échappement pour ce moteur, un frein de stationnement comprenant des moyens de freinage aptes à être sollicités dans une position de freinage du moteur par des moyens de rappel et à être sollicités dans une position inactive par alimentation en fluide d'une chambre de défreinage par une conduite de défreinage, le circuit comprenant, en outre, des moyens de commande du défreinage aptes à relier ladite conduite de défreinage à une première source de fluide de défreinage, des moyens pour relier la chambre de défreinage à un réservoir sans pression, des moyens de valve de court-circuit aptes à isoler ou à relier entre-elles lesdites conduites principales d'alimentation et d'échappement, des moyens de valve de sélection aptes à raccorder la conduite de défreinage avec la chambre de défreinage ou à isoler ladite conduite de ladite chambre et des moyens auxiliaires de défreinage aptes à raccorder la chambre de défreinage à une deuxième source de fluide de défreinage lorsque cette chambre est isolée de la conduite de défreinage.

Lorsque le moteur fonctionne pour entraîner le véhicule, on réalise un défreinage en alimentant en fluide la chambre de défreinage, de sorte que les moyens de défreinage occupent leur position inactive. Lorsque l'on souhaite réaliser un freinage mécanique, on cesse d'alimenter la conduite de défreinage par la première source de fluide de défreinage et on relie la chambre de défreinage au réservoir sans pression, de manière à permettre la vidange de cette chambre.

Par exemple, une valve est disposée sur la conduite de défreinage et raccorde cette dernière soit à la première source de fluide de défreinage, soit au réservoir sans pression.

Lorsque le circuit n'est pas alimenté en fluide, le moteur est inactif et la chambre de défreinage n'est pas alimentée, de sorte que les moyens de défreinage sont dans leur position de freinage sous l'effet des moyens de rappel qui sont en particulier des moyens de rappel élastique tels qu'un ressort.

II est parfois nécessaire de remorquer le véhicule. Pour que ce remorquage s'effectue dans de bonnes conditions, deux conditions doivent être réunies. Premièrement, il faut éviter que le moteur hydraulique n'oppose un couple résistant au remorquage, c'est-à-dire qu'il convient de désactiver ce moteur en permettant à son rotor de tourner en roue libre. Pour cela, les moyens de valve de court-circuit sont commandés pour relier des conduites principales d'alimentation et d'échappement, c'est-à-dire pour créer un court-circuit entre ces conduites.

La deuxième condition est la désactivation du frein. La première source de fluide de défreinage peut être une pompe auxiliaire telle qu'une pompe de gavage ou la pompe principale du circuit, qui est entraînée de manière à refouler du fluide sous pression en situation de fonctionnement du véhicule, en général à l'aide d'un moteur thermique. Pour le remorquage, cette première source de fluide de défreinage n'est pas utilisée, en particulier parce que ce moteur thermique n'est pas mis en fonctionnement. C'est donc la deuxième source de fluide de défreinage qui est utilisée pour désactiver le frein en situation de remorquage. Il s'agit par exemple d'une pompe à main, d'une pompe alimentée par un petit moteur indépendant, ou encore d'une source de fluide sous pression disponible sur le véhicule pour une fonction autre que son entraînement (par exemple pour l'alimentation d'un outil), même lorsque la transmission du véhicule n'est pas opérationnelle. Pour réaliser le défreinage de remorquage, les moyens de valve de sélection isolent la conduite de défreinage de la chambre de défreinage, qui doit être raccordée à la deuxième source de fluide de défreinage.

Le document US 4,495,767 décrit un circuit hydraulique conventionnel, pour la transmission hydrostatique comprenant une valve de commande trois voies.

Le brevet US 4,317,331 montre un circuit hydraulique de ce type, dans lequel les moyens de valve de court-circuit et les moyens de valve de sélection sont constitués par deux entités hydrauliques distinctes, ayant chacune un moyen de commande spécifique.

La présente invention a pour but de proposer un circuit hydraulique simplifié, permettant d'assurer les fonctions de la valve de court-circuit et de la valve de sélection de manière simple, fiable et peu coûteuse.

Ce but est atteint grâce au fait que le circuit selon l'invention comprend une valve unique de court-circuit et de sélection ayant deux voies principales respectivement reliées à chacune des deux conduites principales et deux voies de sélection respectivement reliées à la chambre de défreinage et à la conduite de défreinage, et des moyens de commande de cette valve aptes à commander une première configuration dans laquelle les voies principales sont isolées tandis que les voies de sélection sont reliées entre elles et une deuxième configuration dans laquelle les voies principales sont reliées entre elles tandis que les voies de sélection sont isolées.

La valve unique de court-circuit et de sélection selon l'invention permet, en un seul élément hydraulique, de réaliser la fonction des moyens de valve de court-circuit et celle des moyens de valve de sélection. Il en résulte évidemment une compacité plus grande que dans l'art antérieur et une facilité accrue de mise en place de la valve dans le circuit. De plus, la mise en oeuvre de la situation de remorquage est grandement simplifiée. En effet, dans la première configuration, le moteur hydraulique peut fonctionner puisque les voies principales sont isolées l'une de l'autre et que, dans le même temps, les voies de sélection sont reliées entre elles de manière à autoriser le défreinage par la première source de fluide de défreinage. En revanche, dans la deuxième configuration, le remorquage est possible puisque les deux voies principales sont reliées, c'est-à-dire que le moteur est court-circuité et que les voies de sélection sont isolées de manière à permettre le défreinage par la deuxième source de fluide de défreinage. Il suffit pour cela de la relier à la chambre de défreinage. Pour passer d'une situation de fonctionnement du moteur à cette situation permettant le remorquage, seule l'entité hydraulique que constitue la valve de court-circuit et de sélection doit être commandée alors que, dans US 4 317 331, deux valves devaient l'être.

Avantageusement, les moyens auxiliaires de défreinage comprennent un conduit auxiliaire de défreinage apte à relier la chambre de défreinage à la deuxième source de fluide de défreinage lorsque la valve de court-circuit et de sélection est dans sa deuxième configuration.

Dans ce cas, la deuxième configuration de la valve de court-circuit et de sélection selon l'invention est utilisée pour permettre le défreinage par la deuxième source de défreinage, par l'intermédiaire du conduit auxiliaire de défreinage. En d'autres termes, dans la deuxième configuration de la valve, il n'est pas nécessaire d'actionner un autre élément hydraulique que la deuxième source de défreinage (convenablement reliée au conduit auxiliaire de défreinage) pour réaliser le défreinage.

Dans ce cas, avantageusement, la valve de court-circuit et de sélection présente, en outre, une voie de défreinage auxiliaire susceptible d'être reliée à la deuxième source de fluide de défreinage, et le conduit auxiliaire de défreinage est réalisé dans ladite valve et est apte, dans la deuxième configuration de cette dernière, à faire communiquer la voie de sélection qui est reliée à la chambre de défreinage avec ladite voie de défreinage auxiliaire.

La voie de défreinage auxiliaire fait alors partie de la valve de court-circuit de sélection selon l'invention et c'est donc à elle que peut être raccordée la deuxième source de fluide de défreinage pour réaliser le défreinage de remorquage, auquel cas le fluide est acheminé vers la chambre de défreinage grâce à la voie de sélection qui est reliée à cette dernière. On peut également imaginer que la voie de défreinage auxiliaire soit reliée en permanence à cette voie de sélection, mais que ladite voie de défreinage auxiliaire puisse être obturée lorsque le remorquage n'est pas nécessaire, par exemple par un bouchon situé à l'extérieur de la valve.

Avantageusement, la valve de court-circuit et de sélection est apte à adopter une configuration intermédiaire dans laquelle les voies principales sont reliées entre elles et dans laquelle les voies de sélection sont reliées entre elles et communiquent avec le conduit auxiliaire de défreinage.

Cette configuration intermédiaire trouve tout son intérêt lorsque le circuit est tel que, en situation de fonctionnement du moteur, le défreinage et le freinage mécanique sont respectivement obtenus par la mise en communication de la conduite de défreinage avec, respectivement, la première source de fluide de défreinage et le réservoir sans pression. En effet, dans ce cas, lorsque le moteur est à l'arrêt, la conduite de défreinage est normalement mise en communication avec le réservoir sans pression. C'est donc dans cette situation que l'on réalise le remorquage, grâce à la valve unique de l'invention. Une fois le remorquage terminé, la configuration intermédiaire précitée permet de momentanément mettre en communication le conduit auxiliaire de défreinage avec la conduite de défreinage, qui est elle-même en communication avec le réservoir sans pression. De ce fait, la configuration intermédiaire permet de vidanger le conduit auxiliaire de défreinage et facilite le passage de la situation défreinée de remorquage à une nouvelle situation de freinage mécanique.

Avantageusement, les moyens de commande de la valve unique de court-circuit et de sélection sont des moyens mécaniques.

Ces moyens mécaniques peuvent être de tout type connu pour déplacer mécaniquement un élément entre deux positions, fonctionnant par exemple par un système de came, par vissage ou par d'autres moyens appropriés. Plutôt que des moyens de commande mécaniques, on peut toutefois souhaiter utiliser des dispositifs de commande par pression de fluide ou tout autre moyen connu de manoeuvre d'un organe mobile.

Selon une disposition particulièrement avantageuse, la valve de court-circuit et de sélection est disposée dans une partie de carter du moteur hydraulique qui présente deux orifices principaux, respectivement reliés, d'une part, aux conduites principales d'alimentation et d'échappement et, d'autre part, aux voies principales de ladite valve, deux conduits auxiliaires respectivement reliés, d'une part, à la chambre de défreinage et à la conduite de défreinage et, d'autre part, aux voies de sélection de la valve, étant également réalisés dans ladite partie de carter.

La partie de carter du moteur hydraulique est usinée pour présenter un logement dans lequel on peut disposer la valve selon l'invention. Elle est également usinée pour que ce logement soit raccordé respectivement aux conduites principales, à la chambre de défreinage et à la conduite de défreinage. La valve constitue une entité hydraulique unique qui est facilement mise en place dans son logement. Son encombrement est ainsi extrêmement limité et le circuit est compact. De plus, la valve est aisément démontable sans qu'il soit nécessaire de démonter une partie importante du moteur.

Avantageusement, la valve de court-circuit et de sélection comporte une voie de retour raccordée à un réservoir sans pression et les voies principales sont reliées à ladite voie de retour dans la deuxième configuration de ladite valve.

Dans ce cas, lorsque le moteur est court-circuité dans la deuxième configuration de la valve, on évite que, lors du remorquage, le fonctionnement en roue libre du moteur qui, par la rotation du rotor de ce moteur, permet à ses pistons de se déplacer, n'entraîne un effet de réalimentation des cylindres dont les pistons se déplacent dans le sens de la sortie. En effet, grâce à leur raccordement à la conduite de retour de fluide, les conduites principales sont sensiblement sans pression.

Dans ce cas, avantageusement, la voie de retour est reliée à une conduite de retour de fuites du moteur hydraulique, elle-même reliée au réservoir sans pression.

L'invention sera bien comprise et ses avantages apparaîtront mieux à la lecture de la description détaillée qui suit, d'un mode de réalisation représenté à titre d'exemple avantageux. La description se réfère aux dessins annexés sur lesquels :
- les figures 1 et 2 sont deux variantes d'un circuit conforme à l'invention ;
- la figure 3 est une vue en coupe axiale d'une valve de court-circuit et de sélection conforme à l'invention ;
- les figures 4A et 4B montrent une valve de court-circuit et de sélection selon une première variante, respectivement dans sa première et dans sa deuxième configuration ;
- les figures 5 et 6 sont des vues analogues à la figure 4A, respectivement pour une deuxième et pour une troisième variante ; et
- la figure 7 est une vue en coupe axiale d'un moteur hydraulique équipé d'une valve selon l'invention.

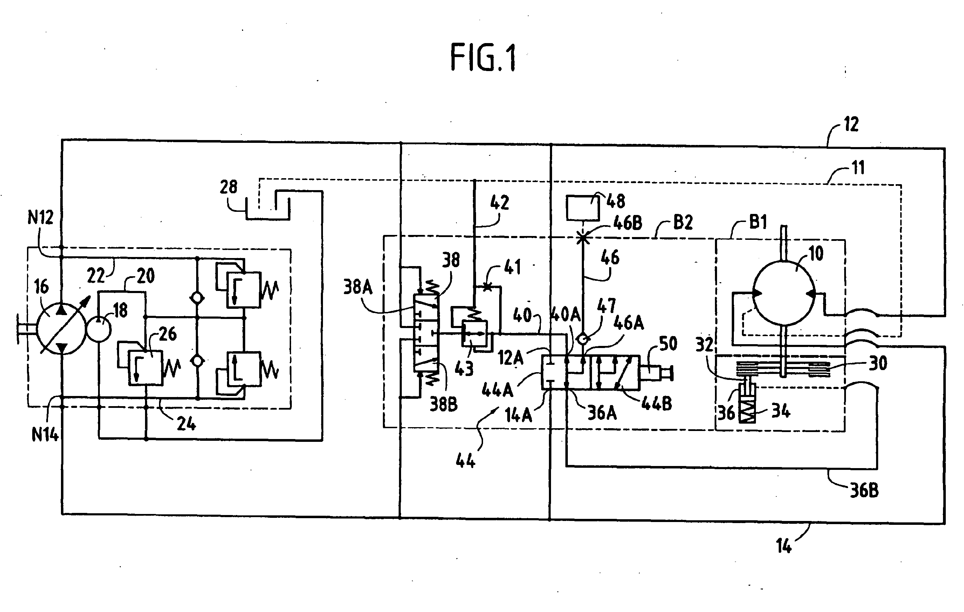

Le circuit de la figure 1 comprend un moteur hydraulique 10 et deux conduites principales, respectivement 12 et 14, reliées aux orifices principaux du moteur pour en assurer respectivement l'alimentation et l'échappement. En l'espèce, le circuit est un circuit fermé, et les deux conduites principales sont reliées aux deux orifices d'une pompe 16 à débit réglable. L'invention s'applique également à un circuit ouvert (non représenté). Le circuit comprend encore une pompe de gavage 18 servant à éviter la cavitation dans les conduites 12 et 14 auxquelles son orifice de refoulement est raccordé en des noeuds N12 et N14 par des lignes de raccordement 22 et 24 sur lesquelles sont disposés des clapets anti-retour et des limiteurs de pression, de manière connue en soi. La ligne de gavage 20 est reliée à un réservoir sans pression 28 par l'intermédiaire d'un limiteur de pression 26 qui sert à maintenir une pression suffisante dans cette ligne de gavage.

Il est prévu un frein de stationnement pour le moteur, qui comporte des moyens de freinage 30 par exemple constitués, de manière connue, par un empilage de disques qui sont intercalés les uns dans les autres et qui sont respectivement solidaires du rotor et du stator du moteur, ou par un système de crabot.

Le frein de stationnement comprend un organe de sollicitation tel qu'un piston 32 qui peut occuper une position active de freinage dans laquelle il sollicite les moyens de freinage en position de freinage, et une position inactive dans laquelle il permet aux moyens de freinage d'occuper leur position inactive. Le piston est constamment sollicité vers sa position active par des moyens de rappel tels qu'un ressort 34, tandis qu'il peut être positivement sollicité dans sa position inactive par alimentation en fluide d'une chambre de défreinage 36.

Le circuit comporte un sélecteur de défreinage 38 qui permet de raccorder la chambre de défreinage 36 à une première source de fluide de défreinage pour désactiver le freinage. Dans l'exemple représenté, il s'agit d'un sélecteur à trois voies et à trois positions, dont les deux premières voies sont respectivement reliées aux conduites principales 12 et 14, tandis que sa troisième voie est reliée à une conduite de défreinage 40.

Le sélecteur 38 est commandé entre ses trois positions sous l'effet de la différence de pression dans les conduites 12 et 14. Dans sa position neutre représentée sur la figure 1, le sélecteur ne raccorde pas la conduite de défreinage 40 à une source de fluide sous pression. Cette conduite 40 étant raccordée en permanence à une conduite 42 de retour de fluide, elle-même reliée au réservoir sans pression 28, la chambre de défreinage est alors simplement reliée à ce réservoir et le frein est activé.

En revanche, lorsque la pression dans la conduite principale 12 est supérieure à la pression dans la conduite principale 14, le sélecteur 38 occupe sa première position active 38A dans laquelle les première et troisième voies du sélecteur, respectivement reliées aux conduites 12 et 40, sont raccordées. La conduite de défreinage peut donc être alimentée en fluide, par l'intermédiaire du réducteur de pression 43. De même, dans la deuxième position active 38B du sélecteur 38, la conduite de défreinage 40 peut être alimentée en fluide par l'intermédiaire de la conduite 14. Dans les deux cas, la restriction 41 interposée entre les conduites 40 et 42 permet l'obtention d'une pression de défreinage suffisante dans la chambre 36.

Ainsi, la première source de fluide de défreinage est la source de fluide constituée par la pompe principale 16 du circuit ou, au moins, par la pompe de gavage 18.

Le circuit comprend une valve unique de court-circuit et de sélection 44 qui peut présenter deux configurations. Cette valve présente deux voies principales, respectivement 12A et 14A, qui sont respectivement raccordées à chacune des conduites principales 12 et 14. Elle présente également deux voies de sélection, respectivement 40A et 36A, qui sont respectivement reliées à la conduite de défreinage 40 et à la chambre de défreinage 36. En l'espèce, la voie 36A est reliée à la chambre de défreinage 36 par l'intermédiaire d'une conduite de raccordement 36B.

Dans la première configuration 44A de la valve 44 représentée sur la figure 1, les voies 12A et 14A sont isolées, tandis que les voies 40A et 36A sont reliées. Il en résulte que les conduites principales 12 et 14 sont isolées, de sorte que le moteur peut fonctionner normalement, tandis que la conduite de défreinage est reliée à la chambre de défreinage 36, de sorte que le défreinage peut être commandé par le sélecteur de défreinage 38 puisque, selon que la conduite 40 est reliée par ce sélecteur à une conduite principale 12 ou 14 ou bien est seulement reliée à la conduite 42, la chambre de défreinage 36 peut être alimentée en fluide de défreinage ou au contraire être vidangée.

Dans la deuxième configuration 44B de la valve 44, ses voies principales 12A et 14A sont reliées, tandis que ses voies de sélection 40A et 36A sont isolées. Cette configuration est celle qui permet le remorquage. En effet, le raccordement des conduites 12 et 14 par la liaison des voies 12A et 14A permet d'éviter une différence de pression entre l'alimentation et l'échappement du moteur, de sorte que ce dernier peut fonctionner en roue libre. La chambre de défreinage 36 est isolée de la conduite de défreinage 40 et, dans cette situation, elle peut être alimentée en fluide par une deuxième source de fluide de défreinage, même si les pompes 16 et 18 ne délivrent pas de fluide sous pression.

On pourrait concevoir que la chambre 36 soit en permanence reliée à un orifice auxiliaire du moteur. En situation normale de fonctionnement du véhicule, cet orifice serait obturé, par exemple par un bouchon, par tout moyen approprié. En revanche, lorsqu'un remorquage serait nécessaire, il suffirait d'ouvrir cet orifice et de le relier à une deuxième source de fluide de défreinage, telle qu'une pompe à main ou une pompe entraînée par un moteur auxiliaire, pour réaliser le défreinage.

En l'espèce, la situation est un peu différente et la valve 44 comprend une cinquième voie 46A qui est reliée à un conduit auxiliaire de défreinage 46. A son extrémité 46B, ce conduit peut lui-même être relié à la deuxième source de fluide de défreinage 48. L'extrémité 46B peut normalement être fermée par un bouchon, et n'être ouverte que pour son raccordement momentané à la source 48 pour réaliser un remorquage du véhicule dont la transmission comprend le moteur 10. Dans sa deuxième configuration, la valve 44 relie les voies 36A et 46A, tout en les isolant de la voie 40A qui est reliée à la conduite de défreinage.

Avantageusement, comme on le voit sur la figure 1, le conduit auxiliaire de défreinage 46 comporte un clapet anti-retour 47 qui autorise seulement la circulation de fluide dans le sens allant de la deuxième source de fluide de défreinage 48 vers la chambre de défreinage 36. On évite ainsi toute fuite de fluide provenant de la chambre de défreinage 36 vers l'extérieur par le conduit 46, en particulier lors de l'éventuelle ouverture de cette extrémité, pour la raccorder à la deuxième source de fluide de défreinage.

Avantageusement, la valve 44 comporte une voie de retour qui est raccordée au réservoir sans pression 28 et, dans la deuxième configuration de cette valve, les voies principales 12A et 14A sont reliées à cette voie de retour. En l'espèce, comme on l'a déjà indiqué, la voie 40A est reliée à la conduite de défreinage 40 qui, elle-même, est reliée en permanence au réservoir 28 par la conduite 42. Ainsi, la voie 40A est à la fois la voie de sélection qui est reliée à la conduite de défreinage et la voie de retour précitée. Dans la deuxième position 44B, on voit que les voies 12A, 14A et 40A sont reliées entre elles.

Le moteur 10 présente un orifice de retour de fuites qui est relié au réservoir 28 par une conduite de retour de fuites 11. En l'espèce, on voit que la conduite 42 est reliée au réservoir sans pression 28 par l'intermédiaire de cette conduite de retour de fuites 11. Ainsi, c'est par l'intermédiaire de la conduite de retour de fuite 11 du moteur 10 que la voie de retour de la valve 44 est reliée au réservoir sans pression 28.

La valve 44 est commandée entre ses deux configurations par des moyens de commande 50 de tout type approprié.

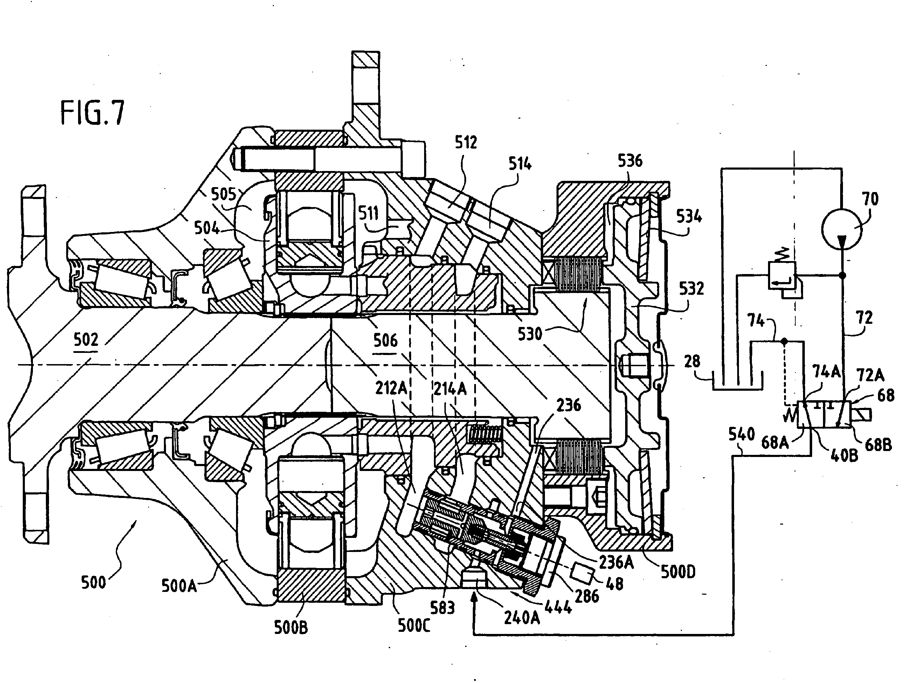

La valve 44 est disposée dans un même bloc que le moteur. Plus précisément, le moteur 10 et son frein constituent un sous-bloc B1, tandis que les valves 38 et 44 forment un sous-bloc B2, B1 et B2 formant un même bloc hydraulique. En effet, comme on le verra en référence à la figure 7, la valve de court-circuit et de sélection peut être intégrée au carter du moteur.

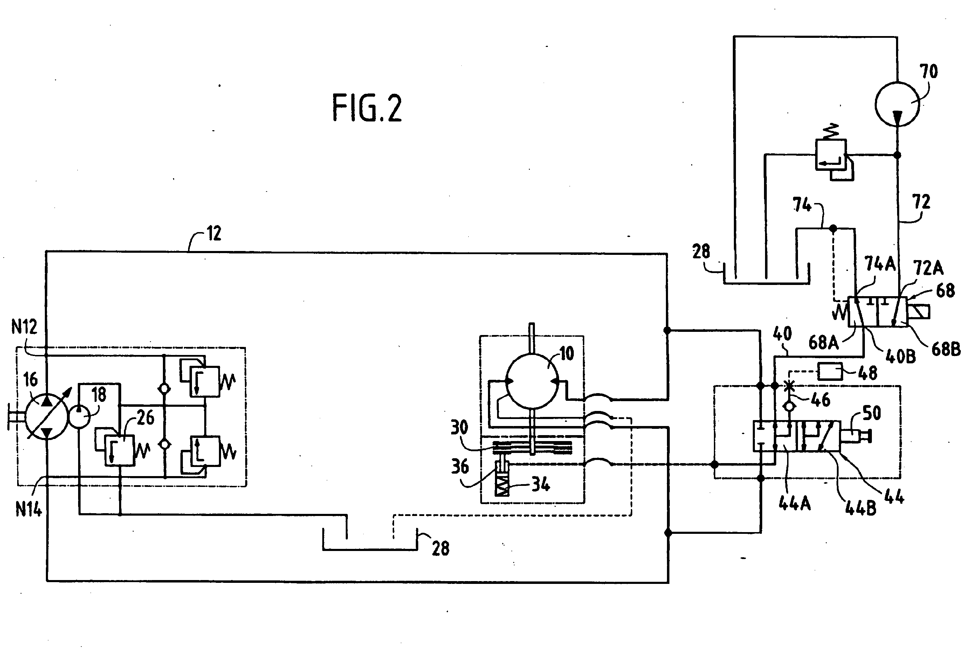

On décrit maintenant le circuit de la figure 2, sur lequel les éléments inchangés par rapport à la figure 1 conservent les mêmes références. Les différences entre les circuits des figures 1 et 2 concernent les moyens de commande du défreinage et le sélecteur de défreinage. En effet, sur la figure 2, la conduite de défreinage 40 est directement reliée à un sélecteur de défreinage 68 à deux positions tel qu'une électrovalve. La première source de fluide de défreinage est constituée par une pompe 70 qui peut alimenter en fluide une conduite d'alimentation du défreinage 72. Le sélecteur 68 comporte trois voies, à savoir une première voie 40B reliée à la conduite de défreinage 40, une deuxième voie 72A reliée à la conduite 72 et une troisième voie 74A reliée au réservoir sans pression 28 par l'intermédiaire d'une conduite de retour 74.

Le sélecteur 68 est représenté dans sa première position 68A, dans laquelle ses voies 40B et 74A sont reliées, de sorte que la conduite de défreinage est reliée au réservoir 28. Dans sa deuxième position 68B, le sélecteur relie la conduite de défreinage 40 à la pompe 70 par la liaison entre ses voies 40B et 72A. Ainsi, lorsque la valve 44 occupe sa première configuration 44A, le défreinage est uniquement commandé par le sélecteur 68. En effet, dans ce cas, dans la première position 68A de ce sélecteur, la chambre de défreinage 36 peut être vidangée par la liaison entre la conduite 40 et le réservoir sans pression 28, tandis que, dans la deuxième position 68B de ce sélecteur, la chambre de défreinage peut être alimentée par la conduite 40 qui reçoit du fluide de la pompe 70. En revanche, dans la deuxième position 44B de la valve 44, le défreinage peut seulement être réalisé par une deuxième source de fluide de défreinage, comme indiqué en référence à la figure 1.

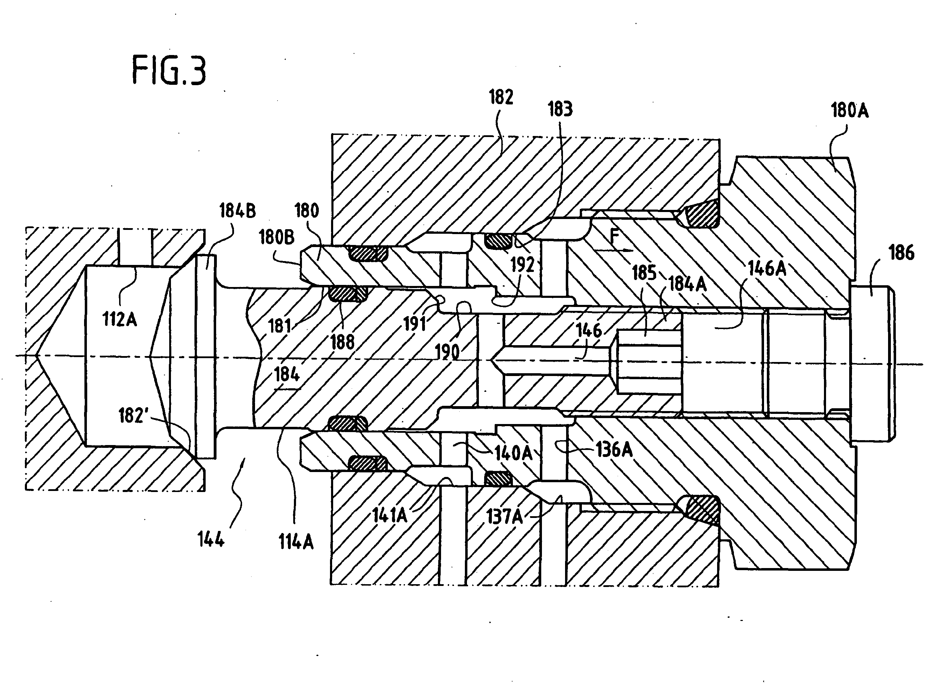

On décrit maintenant la figure 3, qui montre un exemple de valve de court-circuit et de sélection conforme à l'invention. Cette valve 144 comprend un corps de valve 180, qui est fixé (par exemple par vissage) dans un alésage 183 d'un corps extérieur 182 qui, comme on le verra dans la suite, peut être une partie de carter d'un moteur hydraulique. Un organe mobile 184 est monté dans le corps de valve 180 et peut être manoeuvré à partir de l'extrémité du corps de valve 180 qui débouche à l'extérieur du corps 182. Par exemple, l'extrémité libre 180A du corps de valve qui porte un écrou qui permet de le visser dans le corps 182 est percé, et un bouchon 186 est disposé dans ce perçage. L'extrémité 184A de l'organe mobile qui est tournée vers ce bouchon 186 est conformée de manière à pouvoir être entraînée en rotation par des moyens appropriés. Par exemple, elle comporte un perçage 185 ayant des facettes de prise pour un outil tel qu'une clé à six pans.

L'organe mobile 184 est disposé dans l'alésage 181 du corps de valve et coopère avec ce dernier par vissage, sa partie d'extrémité 184A étant filetée et coopérant avec un taraudage formé dans un tronçon de l'alésage 181. Pour déplacer l'organe mobile 184 entre ses deux positions, il suffit d'ôter le bouchon 186 et, à l'aide d'un outil tel qu'une clé à six pans, d'entraîner l'organe mobile 184 en rotation de telle sorte qu'il se déplace en translation dans l'alésage 181 par vissage.

A l'opposé de son extrémité 184A, l'organe mobile 184 présente une tête 184B qui, dans la première position de cet organe mobile, coopère avec un siège 182' réalisé dans le corps externe 182. En effet, la tête 184B s'étend au-delà de l'extrémité 180B du corps de valve 180 opposée à son autre extrémité 180A.

Les deux voies principales 112A et 114A de la valve 144 sont séparées l'une de l'autre par le siège 182'. Elles sont formées par des conduits pratiqués dans le corps extérieur 182 et communiquent avec les conduites principales du moteur. Ainsi, selon la position de l'organe mobile 184, les deux voies principales peuvent être reliées entre elles ou isolées par la coopération de la tête 184B avec son siège 182'.

Les deux voies de sélection 136A et 140A sont formées par deux autres conduits pratiqués dans le corps de valve 180, le corps extérieur 182 présentant des perçages de communication, respectivement 137A et 141A, disposés en regard des conduits 136A et 140A et faisant communiquer en permanence ces conduits avec l'alésage 181, ces perçages de communication étant eux-mêmes respectivement reliés à la chambre de défreinage et à la conduite de défreinage.

Ainsi, les deux voies principales et les deux voies de sélection débouchent dans l'alésage 181. On voit que la valve 144 comporte des moyens pour réaliser une étanchéité entre un premier ensemble constitué par les deux voies principales 112A et 114A et un deuxième ensemble constitué par les deux voies de sélection 140A et 136A. Dans l'exemple représenté, ces moyens sont constitués par un ou plusieurs joints 188 disposés dans une gorge formée à la périphérie externe de l'organe mobile 184 et coopérant avec la paroi de l'alésage 181 dans une portion lisse de ce dernier. On peut souhaiter faire l'économie de tels joints en réalisant l'étanchéité seulement par un ajustage de l'organe mobile 184 dans l'alésage 181 de telle sorte que, dans la portion de cet alésage qui sépare les deux ensembles précités, la coopération entre l'organe mobile et l'alésage se fasse sensiblement sans jeu. On peut ainsi obtenir une étanchéité pratiquement complète ou relative, en fonction du jeu et des tolérances de fabrication.

Ainsi, les deux voies principales et les deux voies de sélection débouchent dans deux zones distinctes de l'alésage 181 et sont séparées par des moyens d'étanchéité (joints 188 ou jeu réduit) qui coopèrent avec la périphérie de l'organe mobile 184.

Entre les moyens d'étanchéité 188 et son extrémité 184A, l'organe mobile 184 présente des moyens de raccordement pour les voies de sélection 136A et 140A. Ces moyens de raccordement sont par exemple constitués par une portion de section réduite formant une gorge 190. Dans la première position de l'organe mobile 184 représentée sur la figure 3, cette gorge se trouve à la fois en regard des perçages 136A et des perçages 140A. Dans sa deuxième position, l'organe mobile est déplacé dans le sens F de telle sorte qu'une portion d'étanchéité 191 de la périphérie externe du tiroir située entre la gorge 190 et les joints 188 vienne coopérer avec une portion d'étanchéité 192 formée sur la paroi de l'alésage 181, entre les conduits 140A et 136A. Ainsi, dans la deuxième position de l'organe mobile 184, les voies de sélection 136A et 140A sont isolées l'une de l'autre. En revanche, la tête 184B s'étant rapprochée du corps 180, les voies principales 112A et 114A communiquent.

Dans cette deuxième position, l'organe mobile 184 isole toutefois les voies principales 112A et 114A de la voie de sélection 140A, par les joints 188.

Par ailleurs, l'organe mobile 184 présente un perçage 146 qui s'ouvre, d'une part, à l'extrémité 184A et, d'autre part, dans la gorge 190. Ce perçage constitue un conduit auxiliaire de défreinage et la partie de l'alésage 181 dans laquelle se trouve l'extrémité 184A de l'organe mobile 184 constitue une voie auxiliaire de défreinage 146A. Comme on le voit sur la figure 3, dans la première configuration de la valve 144, cette voie 146A communique avec les deux voies de sélection 136A et 140A par le conduit 146. En revanche, lorsque l'organe mobile est dans sa deuxième position, la voie 146A communique seulement avec la voie de sélection 136A qui est celle qui est raccordée à la chambre de défreinage.

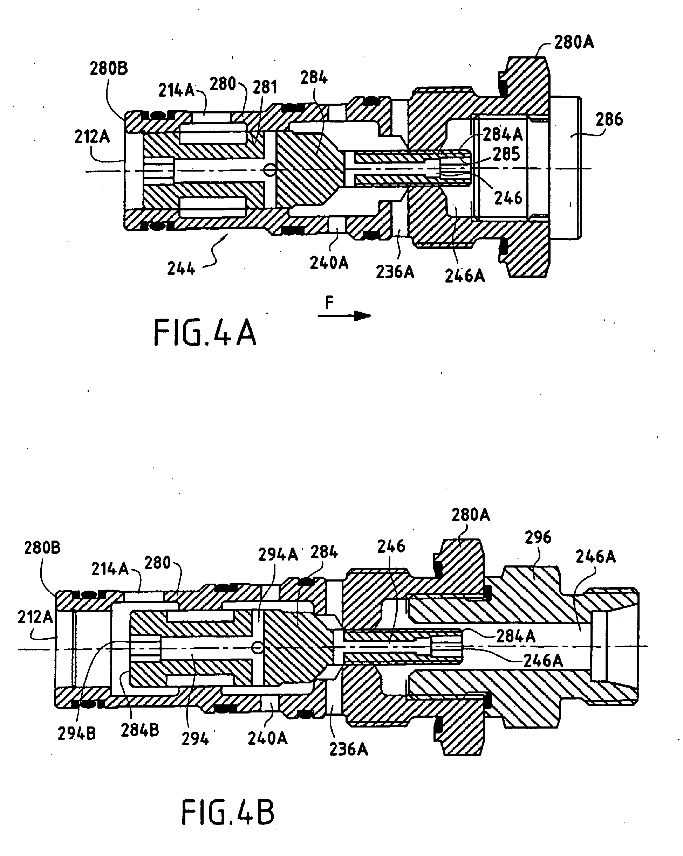

On décrit maintenant les figures 4A et 4B, sur lesquelles on a utilisé les mêmes références que sur la figure 3 augmentées de 100 pour désigner les éléments correspondants. Le corps 280 de la valve 244 est plus long que celui de la figure 3, et la première voie principale 212A est réalisée à l'extrémité 280B de ce corps, tandis que la deuxième voie principale 214A et les voies de sélection 236A et 240A sont réalisées entre l'extrémité 280B et l'extrémité opposée 280A dans trois zones axiales successives. Dans sa première position visible sur la figure 4A, l'organe mobile 284 isole les voies 212A et 214A, tandis qu'il raccorde les voies 240A et 236A.

Comme l'organe 184, l'organe mobile 284 est commandé par vissage entre ses deux positions. Sur la figure 4B, il occupe sa deuxième position car il a été déplacé dans le sens F par rapport à la figure 4A. Dans ce cas, la voie 236A est isolée de la voie 240A et communique avec la voie auxiliaire de défreinage 246A par le conduit auxiliaire de défreinage 246. Ce dernier est constitué par un premier perçage de l'organe mobile 284, situé du côté de son extrémité 284A. Cet organe mobile comporte un deuxième perçage 294, qui est situé du côté de son extrémité 284B opposée à son extrémité 284A. Ce perçage 294 s'ouvre en 294A sur la périphérie axiale de l'organe mobile 284, dans une région médiane de ce dernier, et il s'ouvre également en 294B à l'extrémité 284B de cet organe mobile. Dans la première position de ce dernier visible sur la figure 4A, l'ouverture 294A est obturée par la coopération entre l'organe mobile et la paroi de l'alésage 281. En revanche, dans la deuxième position de l'organe mobile 284, cette ouverture 294A est située en regard de la voie de sélection 240A, de telle sorte qu'elle permet aux voies principales 212A et 214A de communiquer avec la voie de sélection 240A. Cette situation est donc conforme à la deuxième configuration 44B de la valve 44 de la figure 1 et permet, comme indiqué précédemment, de faire communiquer les conduites principales du moteur avec un réservoir sans pression.

Par ailleurs, sur la figure 4B, le bouchon 286 a été enlevé et une pièce de raccordement 296 a été vissée dans l'alésage 281, au voisinage de l'extrémité 280A du corps de valve 280, pour permettre l'alimentation en fluide du conduit 246 par un fluide provenant d'une deuxième source de fluide de défreinage non représentée.

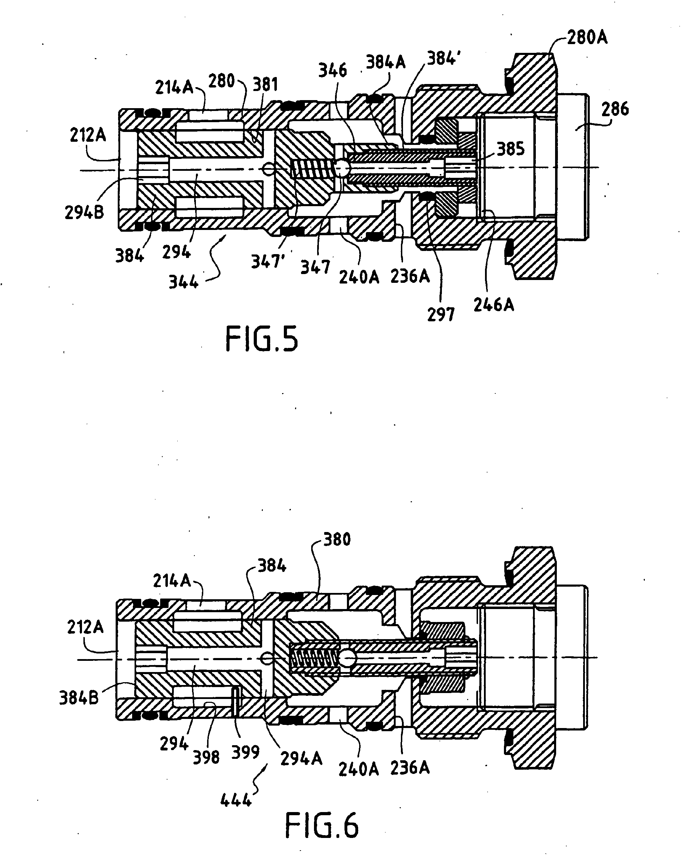

La figure 5 montre une variante de la valve des figures 4A et 4B, et les références utilisées pour désigner les éléments inchangés sont également inchangées. L'organe mobile 384 de la valve 344 est légèrement différent de l'organe mobile 284, car il comporte un clapet anti-retour dans son conduit auxiliaire de défreinage 346. En effet, à l'extrémité 384A de cet organe mobile dans laquelle est ménagé le conduit auxiliaire de défreinage 346, une bille ou analogue 347, constamment sollicitée vers l'extrémité 384A par un ressort 347', est maintenue en place par une pièce auxiliaire 384' qui est vissée à l'extrémité 384A de l'organe mobile, dans le perçage de cette dernière.

Le fonctionnement de la valve 344 est identique à celui de la valve 244 à ceci près que le clapet anti-retour 347, 347' empêche la circulation de fluide dans le sens allant de la voie de sélection 236A vers la voie auxiliaire de défreinage 246A. Par ailleurs, une étanchéité est assurée par un joint 297 entre la périphérie externe de l'organe mobile 384 au voisinage de son extrémité 384A et la paroi de l'alésage 381 dans lequel est disposé l'organe mobile.

Pour amener dans sa deuxième position l'organe mobile 384 équipé de pièce auxiliaire 384', il suffit, après avoir enlevé le bouchon 286, d'utiliser un outil de vissage du genre d'une clé, de le faire coopérer avec la surface adaptée 385 formée à l'extrémité libre de la pièce 384' et d'entraîner ainsi les pièces 384 et 384' en rotation dans le sens approprié. Une rotation en sens inverse ramène ces pièces dans leur première position. Pour éviter que, selon le sens du filetage entre les pièces 384 et 384', la rotation dans l'un de ces deux sens n'ait tendance à désolidariser les pièces 384 et 384', elles peuvent avoir une fixation additionnelle telle qu'un collage.

Lors de la mise en place de la pièce 384' à l'extrémité 384A de la pièce 384 par vissage à l'aide d'un premier outil, on maintient celle-ci pour l'empêcher de tourner grâce à la conformation appropriée (à facettes) de l'extrémité libre 294B du perçage 294 à l'aide d'un deuxième outil.

La figure 6 présente une variante qui permet d'éviter de recourir à deux outils pour cette mise en place. En effet, une ou plusieurs rainures longitudinales 398 sont ménagées sur la périphérie axiale de l'organe mobile 384, par exemple entre l'extrémité libre 384B de ce dernier et les ouvertures 294A du conduit de liaison 294. Un moyen de calage en rotation tel qu'une goupille 399 est disposé dans le corps 380 de la valve 444 de manière à s'engager dans une rainure 398. Ainsi, la mise en place de la pièce 384' à l'extrémité de la pièce 384 peut être réalisée après l'introduction de cette dernière dans le corps de valve 380.

La figure 7 montre un moteur hydraulique équipé d'une valve de court-circuit et de sélection conforme à l'invention. En l'espèce, ce moteur est un moteur à pistons radiaux et à arbre tournant, mais il peut également s'agir d'un moteur à carter tournant. Il s'agit par exemple d'un moteur du type décrit dans les demandes de brevet FR-A-2 588 615 et FR-A-2 780 450. Le carter du moteur 500 est en trois parties, 500A, 500B et 500C, qui sont assemblées. La came du moteur est formée à la périphérie interne de la partie 500B. Le moteur 500 comporte un arbre 502 qui est entraîné en rotation car il est solidaire du bloc-cylindres 504, par exemple par des cannelures.

Ce moteur comporte également un frein de stationnement. En l'espèce, il comporte un arbre de frein 506, qui est également solidaire en rotation du bloc-cylindres et qui, à son extrémité éloignée du bloc-cylindres, porte des moyens de freinage, par exemple constitués par une première série de disques 530. Une partie fixe de carter 500D, dénommée carter de frein, porte le reste des moyens de freinage, par exemple constitués par une autre série de disques intercalés entre ceux de la première série. Les disques sont sollicités en contact de freinage par un piston de frein 532, lui-même sollicité en permanence dans le sens du contact de freinage par un ressort de rappel 534. Le système de frein comporte une chambre de défreinage 536 qui peut être alimentée en fluide par une conduite de défreinage 550, cette dernière pouvant elle-même être reliée à une première source de fluide de défreinage, ou bien à un réservoir sans pression.

Le moteur comporte deux orifices principaux, respectivement reliés à deux conduites principales, 512 et 514. Ces orifices s'ouvrent dans la partie 500C du carter. Dans l'exemple représenté, la valve qui équipe ce moteur est la valve 444 de la figure 6, qui est montée dans un alésage 583 de la partie 500C du carter. Par des usinages adéquats de cette partie 500C, les orifices 512 et 514 communiquent respectivement avec les deux voies principales 212A et 214A de cette valve. La première voie de sélection de la valve 236A communique avec la chambre de défreinage 536 par un conduit 236 formé dans la partie 500C du carter. La deuxième voie de sélection 240A communique avec la conduite de défreinage 540. Cette conduite est reliée à un sélecteur de défreinage 68 identique à celui de la figure 2 et, selon la position de ce sélecteur, elle peut être alimentée par la pompe auxiliaire 70 ou être raccordée au réservoir 28, par exemple par l'intermédiaire de l'espace intérieur 505 du carter du moteur et par son retour de fuites 511, si la valve 68 est intégrée dans le carter.

Ainsi, la valve de court-circuit et de sélection selon l'invention est fixée de manière amovible dans un alésage du carter du moteur hydraulique, par son corps de valve dans lequel est disposé son tiroir.

Cette partie 500C du carter ou une autre partie du carter, par exemple le couvercle du frein 500D, présente avantageusement un orifice de défreinage auxiliaire accordé à la voie de défreinage auxiliaire de la valve de court-circuit de sélection. Toutefois, comme on le voit sur la figure 7, cet orifice de défreinage auxiliaire peut être réalisé à l'extrémité de la valve qui s'ouvre à l'extérieur du moteur, et qui est obturé par le bouchon 286.

## Revendications

1. Circuit hydraulique pour la transmission hydrostatique d'un véhicule comprenant au moins un moteur hydraulique (10 ; 500), deux conduites principales (12, 14; 512, 514), respectivement d'alimentation et d'échappement pour ce moteur, un frein de stationnement comprenant des moyens de freinage (30 ; 530) aptes à être sollicités dans une position de freinage du moteur par des moyens de rappel (34 ; 534) et à être sollicités dans une position inactive par alimentation en fluide d'une chambre de défreinage (36 ; 536) par une conduite de défreinage (40), le circuit comprenant, en outre, des moyens (38 ; 68) de commande du défreinage aptes à relier ladite conduite de défreinage (40) à une première source de fluide de défreinage (16, 18 ; 70), des moyens (42 ; 74) pour relier la chambre de défreinage (36 ; 536) à un réservoir sans pression (28), des moyens de valve de court-circuit aptes à isoler ou à relier entre-elles lesdites conduites principales d'alimentation et d'échappement (12, 14 ; 512, 514), des moyens de valve de sélection aptes à raccorder la conduite de défreinage (40) avec la chambre de défreinage (36 ; 536) ou à isoler ladite conduite de ladite chambre et des moyens auxiliaires de défreinage (46) aptes à raccorder la chambre de défreinage à une deuxième source de fluide de défreinage (48) lorsque cette chambre (36 ; 536) est isolée de la conduite de défreinage (40 ; 540),
**caractérisé en ce qu'**il comprend une valve unique de court-circuit et de sélection (44 ; 144 ; 244 ; 344 ; 444) ayant deux voies principales (12A, 14A ; 112A, 114A ; 212A, 214A) respectivement reliées à chacune des deux conduites principales (12, 14 ; 512, 514) et deux voies de sélection (36A, 40A ; 136A, 140A ; 236A, 240A) respectivement reliées à la chambre de défreinage (36 ; 536) et à la conduite de défreinage (40), et des moyens de commande (50 ; 185, 285, 385) de cette valve aptes à commander une première configuration (44A) dans laquelle les voies principales sont isolées tandis que les voies de sélection sont reliées entre elles et une deuxième configuration (44B) dans laquelle les voies principales sont reliées entre elles tandis que les voies de sélection sont isolées.

2. Circuit selon la revendication 1, **caractérisé en ce que** la valve de court-circuit et de sélection (44 ; 144 ; 244 ; 344, 444) comprend un corps de valve (180 ; 280 ; 380) et un organe (184 ; 284 ; 384, 384') mobile dans un alésage (181 ; 281 ; 381) de ce corps entre une première et une deuxième position déterminant respectivement lesdites première et deuxième configurations.

3. Circuit selon la revendication 2, **caractérisé en ce que** les deux voies principales (112A, 114A) et les deux voies de sélection (186A, 140A) débouchent dans l'alésage (181) et **en ce que** la valve de court-circuit et de sélection (144) comporte des moyens (188) pour réaliser une étanchéité entre un premier ensemble constitué par les deux voies principales et un deuxième ensemble constitué par les deux voies de sélection.

4. Circuit selon la revendication 3, **caractérisé en ce que** les deux voies principales (112A, 114A) et les deux voies de sélection (136A, 140A) débouchent dans deux zones distinctes de l'alésage (181), séparées par des moyens d'étanchéité (188) coopérant avec la périphérie de l'organe mobile (184).

5. Circuit selon l'une quelconque des revendications 1 à 4, **caractérisé en ce que** les moyens auxiliaires de défreinage comprennent un conduit auxiliaire de défreinage (46 ; 146 ; 246 ; 346) apte à relier la chambre de défreinage (36; 536) à la deuxième source de fluide de défreinage (48) lorsque la valve de court-circuit et de sélection (44 ; 144 ; 244 ; 344 ; 444) est dans sa deuxième configuration (44B).

6. Circuit selon la revendication 5, **caractérisé en ce que** la valve de court-circuit et de sélection (44 ; 144 ; 244 ; 344 ; 444) présente, en outre, une voie de défreinage auxiliaire (46A ; 146A ; 246A) susceptible d'être reliée à la deuxième source de fluide de défreinage (48) et **en ce que** le conduit auxiliaire de défreinage (46 ; 146 ; 246 ; 346) est réalisé dans ladite valve et est apte, dans la deuxième configuration (44B) de cette dernière, à faire communiquer la voie de sélection (36A ; 136A ; 236A) qui est reliée à la chambre de défreinage (36) avec ladite voie de défreinage auxiliaire (46A; 146A; 246A).

7. Circuit selon la revendication 6, **caractérisé en ce que** la valve de court-circuit et de sélection (44 ; 144 ; 244 ; 344 ; 444) est apte à adopter une configuration intermédiaire dans laquelle les voies principales (212A, 214A) sont reliées entre elles et dans laquelle les voies de sélection (236A, 240A) sont reliées entre elles et communiquent avec le conduit auxiliaire de défreinage (246).

8. Circuit selon les revendications 2 et 6 et l'une quelconque des revendications 1 à 7, **caractérisé en ce que** le conduit auxiliaire de défreinage (246 ; 346) est raccordé en permanence à la voie de défreinage auxiliaire (246A).

9. Circuit selon la revendication 8, **caractérisé en ce que** le conduit auxiliaire de défreinage (246, 346) est réalisé dans l'organe mobile (184 ; 284 ; 384, 384') et débouche à une extrémité axiale (184A, 284A, 384A) de ce dernier située du côté d'une extrémité de l'alésage (181 ; 281 ; 381) et **en ce que** la voie de défreinage auxiliaire (146A ; 246A) communique avec ladite extrémité de l'alésage.

10. Circuit selon l'une quelconque des revendications 1 à 9, **caractérisé en ce que** les moyens de commande (50 ; 185 ; 285 ; 385) de la valve unique de court-circuit et de sélection (44 ; 144 ; 244 ; 344 ; 444) sont des moyens mécaniques.

11. Circuit selon l'une quelconque des revendications 1 à 10, **caractérisé en ce que** la valve de court-circuit et de sélection (44 ; 144 ; 244 ; 344 ; 444) est disposée dans une partie de carter (500C) du moteur hydraulique (10 ; 500) qui présente deux orifices principaux, respectivement reliés, d'une part, aux conduites principales d'alimentation et d'échappement (512, 514) et, d'autre part, aux voies principales (212A, 214A) de ladite valve, deux conduits auxiliaires (236, 542) respectivement reliés, d'une part, à la chambre de défreinage (536) et à la conduite de défreinage (540) et, d'autre part, aux voies de sélection (236A, 240A) de la valve, étant également réalisés dans ladite partie de carter.

12. Circuit selon la revendication 11, **caractérisé en ce que** la valve de court-circuit et de sélection (44 ; 144 ; 244 ; 344 ; 444) comprend un corps de valve (180 ; 280), dans lequel est disposé l'organe mobile de ladite valve (184 ; 284 ; 384, 384') et qui est fixé de manière amovible dans un alésage (183 ; 583) de ladite partie de carter (500C) du moteur hydraulique.

13. Circuit selon la revendication 6 et la revendication 11 ou 12, **caractérisé en ce que** ladite partie de carter (500C) présente un orifice de défreinage auxiliaire raccordé à la voie de défreinage auxiliaire de la valve de court-circuit et de sélection.

14. Circuit selon la revendication 5 et l'une quelconque des revendications 1 à 13, **caractérisé en ce que** le conduit auxiliaire de défreinage (46) comporte un clapet anti-retour (47) autorisant seulement la circulation du fluide dans le sens allant de la deuxième source de fluide de défreinage (48) vers la chambre de défreinage (36).

15. Circuit selon l'une quelconque des revendications 1 à 14, **caractérisé en ce que** la valve de court-circuit et de sélection (44) comporte une voie de retour (40A) raccordée à un réservoir sans pression (28) et **en ce que**, dans la deuxième configuration (44B) de ladite valve, les voies principales (12A, 14A) sont reliées à ladite voie de retour (40A).

16. Circuit selon la revendication 15, **caractérisé en ce que** la voie de retour (40A) est reliée à une conduite de retour de fuites (11) du moteur (10) hydraulique, elle-même reliée au réservoir sans pression (28).

## Claims

1. A hydraulic circuit for the hydrostatic transmission of a vehicle comprising at least one hydraulic motor (10; 500), two main conduits (12, 14; 512, 514), respectively a feed conduit and a discharge conduit for this motor, a parking brake comprising braking means (30; 530) capable of being actuated into a braking position of the motor by return means (34, 534) and of being actuated into an inactive position by feeding fluid into a brake release chamber (36; 536) through a brake release conduit (40), the circuit further comprising means (38; 68) for controlling brake release capable of connecting said brake release conduit (40) to a first source of brake release fluid (16, 18; 70), means (42; 74) for connecting the brake release chamber (36; 536) to a pressureless reservoir (28), short-circuit valve means capable of isolating or connecting together said main feed and discharge conduits (12, 14; 512, 514), selection valve means capable of connecting the brake release conduit (40) with the brake release chamber (36; 536) or of isolating said conduit from said chamber and auxiliary brake release means (46) capable of connecting the brake release chamber to a second source of brake release fluid (48) when this chamber (36; 536) is isolated from the brake release conduit (40; 540),
**characterized in that** it comprises a single short-circuit and selection valve (44; 144; 244; 344; 444) with two main ports (12A, 14A; 112A, 114A; 212A, 214A) connected to each of the two main conduits (12, 14; 512, 514) and two selection ports (36A, 40A; 13A, 140A; 236A, 240A) respectively, connected to the brake release chamber (36; 536) and to the brake release conduit (40) respectively, and means (50; 185, 285, 385) for controlling this valve, capable of controlling a first configuration (44A) in which the main ports are isolated whereas the selection ports are connected together and a second configuration (44B) in which the main ports are connected together whereas the selection ports are isolated.

2. The circuit according to claim 1, **characterized in that** the short-circuit and selection valve (44; 144; 244; 344; 444) comprises a valve body (180; 280; 380) and a member (184; 284; 384, 384') mobile in a bore (181; 281; 381) of this body between a first and a second position determining said first and second configurations respectively.

3. The circuit according to claim 2, **characterized in that** both main ports (112A, 114A) and both selection ports (136A, 140A) open into the bore (181) and **in that** the short-circuit and selection valve (144) includes means (188) for providing a seal between a first assembly formed by both main ports and a second assembly formed by both selection ports.

4. The circuit according to claim 3, **characterized in that** both main ports (112A, 114A) and both selection ports (136A, 140A) open into two distinct areas of the bore (181), separated by sealing means (188) cooperating with the periphery of the mobile member (184).

5. The circuit according to any of claims 1 to 4, **characterized in that** the auxiliary brake release means comprise an auxiliary brake release conduit (46; 146; 246; 346) capable of connecting the brake release chamber (36; 536) to the second source of brake release fluid (48) when the short-circuit and selection valve (44; 144; 244; 344; 444) is in its second configuration (44B).

6. The circuit according to claim 5, **characterized in that** the short-circuit and selection valve (44; 144; 244; 344; 444) further has an auxiliary brake release port (46A; 146A; 246A) capable of being connected to the second source of brake release fluid (48) and **in that** the auxiliary brake release conduit (46; 146; 146; 346) is made in said valve and is capable in the second configuration (44B) of the latter, of having the selection port (36A; 136A; 236A) which is connected to the brake release chamber (36), communicate with said auxiliary brake release port (46A; 146A; 246A).

7. The circuit according to claim 6, **characterized in that** the short-circuit and selection valve (44; 144; 244; 344; 444) is capable of adopting an intermediate configuration in which the main ports (212A, 214A) are connected together and in which the selection ports (236A, 240A) are connected together and communicate with the auxiliary brake release conduit (246).

8. The circuit according to claims 2 and 6 and to any of claims 1 to 7, **characterized in that** the auxiliary brake release conduit (246; 346) is permanently connected to the auxiliary brake release port (246A).

9. The circuit according to claim 8, **characterized in that** the auxiliary brake release conduit (246, 346) is made in the mobile member (184; 284; 384, 384') and opens out at an axial end (184A, 284A, 384A) of the latter located at an end of the bore (181; 281; 381) and **in that** the auxiliary brake release port (146A; 246A) communicates with said end of the bore.

10. The circuit according to any of claims 1 to 9, **characterized in that** the means (50; 185; 285; 385) for controlling the single short-circuit and selection valve (44; 144; 244; 344; 444) are mechanical means.

11. The circuit according to any of claims 1 to 10, **characterized in that** the short-circuit and selection valve (44; 144; 244; 344; 444) is positioned in a case portion (500C) of the hydraulic motor (10; 500) which has two main orifices, respectively connected to the main feed and discharge conduits (512, 514) on the one hand, and to the main ports (212A, 214A) of said valve on the other hand, two auxiliary conduits (236, 542) respectively connected to the brake release chamber (536) and to the brake release conduit (540) on the one hand, and to the selection ports (236A, 240A) of the valve on the other hand, also being made in said case portion.

12. The circuit according to claim 11, **characterized in that** the short-circuit and selection valve (44; 144; 244; 344; 444) comprises a valve body (180; 280), in which the mobile member of said valve (184; 284; 384, 384') is positioned and which is removably fixed in a bore (183; 583) of said case portion (500C) of the hydraulic motor.

13. The circuit according to claim 6 and claim 11 or 12, **characterized in that** said case portion (500C) has an auxiliary brake release orifice connected to the auxiliary brake release port of the short-circuit and selection valve.

14. The circuit according to claim 5 or any of claims 1 to 13, **characterized in that** the auxiliary brake release conduit (46) includes a non-return valve (47) only allowing flow of the fluid in the direction from the second source of brake release fluid (48) towards the brake release chamber (36).

15. The circuit according to any of claims 1 to 14, **characterized in that** the short-circuit and selection valve (44) includes a return port (40A) connected to a pressureless reservoir (28) and **in that**, in the second configuration (44B) of said valve, the main ports (12A, 14A) are connected to said return port (40A).

16. The circuit according to claim 15, **characterized in that** the return port (40A) is connected to a leak return conduit (11) of the hydraulic motor (10), itself connected to the pressureless reservoir (28).

## Patentansprüche

1. Hydraulikkreis für die hydrostatische Kraftübertragung eines Fahrzeugs, umfassend wenigstens einen Hydraulikmotor (10; 500), zwei Hauptleitungen (12, 14; 512, 514) zum Zuführen bzw. Abführen für diesen Motor, eine Feststellbremse, die Bremsmittel (30; 530) aufweist, welche geeignet sind, durch Rückstellmittel (34; 534) in eine Position zum Abbremsen des Motors belastet zu werden und durch Fluidbeaufschlagung einer Bremslösekammer (36; 536) über eine Bremslöseleitung (40) in eine inaktive Position belastet zu werden, wobei der Kreis ferner folgendes umfaßt, nämlich Mittel (38; 68) zum Steuern des Lösens der Bremsung, die geeignet sind, die Bremslöseleitung (40) mit einer ersten Bremslösefluidquelle (16; 18; 70) zu verbinden, Mittel (42; 74), um die Bremslösekammer (36; 536) mit einem drucklosen Behälter (28) zu verbinden, Kurzschlußventilmittel, die geeignet sind, die genannten Hauptleitungen zum Zuführen bzw. Abführen (12, 14; 512; 514) voneinander zu trennen oder miteinander zu verbinden, Auswahlventilmittel, die geeignet sind, die Bremslöseleitung (40) mit der Bremslösekammer (36; 536) zu verbinden oder die Leitung von der Kammer zu trennen, sowie Bremslösehilfsmittel (46), die geeignet sind, die Bremslösekammer mit einer zweiten Bremslösefluidquelle (48) zu verbinden, wenn diese Kammer (36; 536) von der Bremslöseleitung (40; 540) getrennt ist,
**dadurch gekennzeichnet, daß** er ein einziges Kurzschluß- und Auswahlventil (44; 144; 244; 344; 444), welches zwei Hauptwege (12A, 14A; 112A, 114A; 212A, 214A), die mit jeder der zwei Hauptleitungen (12, 14 bzw. 512, 514) verbunden sind, sowie zwei Auswahlwege (36A, 40A; 136A, 140A; 236A, 240A), die mit der Bremslösekammer (36; 536) bzw. mit der Bremslöseleitung (40) verbunden sind, aufweist, sowie Mittel (50; 185, 285, 385) zum Steuern dieses Ventils umfaßt, die geeignet sind, eine erste Konfiguration (44A) zu steuern, bei der die Hauptwege voneinander getrennt sind, während die Auswahlwege miteinander verbunden sind, sowie eine zweite Konfiguration (44B) zu steuern, bei der die Hauptwege miteinander verbunden sind, während die Auswahlwege voneinander getrennt sind.

2. Kreis nach Anspruch 1, **dadurch gekennzeichnet, daß** das Kurzschluß- und Auswahlventil (44; 144; 244; 344; 444) einen Ventilkörper (180; 280; 380) sowie ein Organ (184; 284; 384, 384') aufweist, das in einer Bohrung (181; 281; 381) dieses Körpers zwischen einer ersten und einer zweiten Position beweglich ist, welche die erste bzw. die zweite Konfiguration festlegen.

3. Kreis nach Anspruch 2, **dadurch gekennzeichnet, daß** die zwei Hauptwege (112A, 114A) und die zwei Auswahlwege (136A, 140A) in die Bohrung (181) münden, und daß das Kurzschluß- und Auswahlventil (144) Mittel (188) umfaßt, um zwischen einer von den zwei Hauptwegen gebildeten ersten Einheit und einer von den zwei Auswahlwegen gebildeten zweiten Einheit eine Dichtigkeit herzustellen.

4. Kreis nach Anspruch 3, **dadurch gekennzeichnet, daß** die zwei Hauptwege (112A, 114A) und die zwei Auswahlwege (136A, 140A) in zwei unterschiedliche Bereiche der Bohrung (181) münden, die durch mit dem Umfang des beweglichen Organs (184) zusammenwirkende Dichtungsmittel (188) getrennt sind.

5. Kreis nach einem der Ansprüche 1 bis 4, **dadurch gekennzeichnet, daß** die Bremslösehilfsmittel eine Bremslösehilfsleitung (46; 146; 246; 346) umfassen, die geeignet ist, die Bremslösekammer (36; 536) mit der zweiten Bremslösefluidquelle (48) zu verbinden, wenn das Kurzschluß- und Auswahlventil (44; 144; 244; 344; 444) in seiner zweiten Konfiguration (44B) ist.

6. Kreis nach Anspruch 5, **dadurch gekennzeichnet, daß** das Kurzschluß- und Auswahlventil (44; 144; 244; 344; 444) ferner einen Bremslösehilfsweg (46A; 146A, 246A) aufweist, der geeignet ist, mit der zweiten Bremslösefluidquelle (48) verbunden zu werden, und daß die Bremslösehilfsleitung (46; 146; 246; 346) in dem Ventil ausgebildet und geeignet ist, in der zweiten Konfiguration (44B) des letzteren den Auswahlweg (36A, 136A, 236A), der mit der Bremslösekammer (36) verbunden ist, mit dem Bremslösehilfsweg (46A; 146A, 246A) in Verbindung zu bringen.

7. Kreis nach Anspruch 6, **dadurch gekennzeichnet, daß** das Kurzschluß- und Auswahlventil (44; 144; 244; 344; 444) geeignet ist, eine Zwischenkonfiguration anzunehmen, bei der die Hauptwege (212A, 214A) untereinander verbunden sind und bei der die Auswahlwege (236A, 240A) untereinander verbunden sind und mit der Bremslösehilfsleitung (246) in Verbindung stehen.

8. Kreis nach den Ansprüchen 2 und 6 sowie einem der Ansprüche 1 bis 7, **dadurch gekennzeichnet, daß** die Bremslösehilfsleitung (246; 346) ständig mit dem Bremslösehilfsweg (246A) verbunden ist.

9. Kreis nach Anspruch 8, **dadurch gekennzeichnet, daß** die Bremslösehilfsleitung (246, 346) in dem beweglichen Organ (184; 284; 384; 384') ausgebildet ist und an einem auf der Seite eines Endes der Bohrung (181; 281; 381) gelegenen axialen Ende (184A, 284A, 384A) dessen ausmündet, und daß der Bremslösehilfsweg (146A; 246A) mit dem genannten Ende der Bohrung in Verbindung steht.

10. Kreis nach einem der Ansprüche 1 bis 9, **dadurch gekennzeichnet, daß** die Steuermittel (50; 185; 285; 385) des einzigen Kurzschluß- und Auswahlventils (44; 144; 244; 344; 444) mechanische Mittel sind.

11. Kreis nach einem der Ansprüche 1 bis 10, **dadurch gekennzeichnet, daß** das Kurzschluß- und Auswahlventil (44; 144; 244; 344; 444) in einem Gehäuseteil (500C) des Hydraulikmotors (10; 500) angeordnet ist, der zwei Hauptöffnungen aufweist, welche einerseits mit der Hauptzufuhr- bzw. der Hauptabführleitung (512, 514) und andererseits mit den Hauptwegen (212A, 214A) des Ventils verbunden sind, wobei zwei Hilfsleitungen (236, 542), die einerseits mit der Bremslösekammer (536) bzw. der Bremslöseleitung (540) und andererseits mit den Auswahlwegen (236A, 240A) des Ventils verbunden sind, ebenfalls in dem Gehäuseteil ausgebildet sind.

12. Kreis nach Anspruch 11, **dadurch gekennzeichnet, daß** das Kurzschluß- und Auswahlventil (44; 144; 244; 344; 444) einen Ventilkörper (180; 280) umfaßt, in dem das bewegliche Organ (184; 284; 384; 384') des Ventils angeordnet ist und der in einer Bohrung (183; 583) des Gehäuseteils (500C) des Hydraulikmotors lösbar befestigt ist.

13. Kreis nach Anspruch 6 sowie Anspruch 11 oder 12, **dadurch gekennzeichnet, daß** der Gehäuseteil (500C) eine Bremslösehilfsöffnung aufweist, die mit dem Bremslösehilfsweg des Kurzschluß- und Auswahlventils verbunden ist.

14. Kreis nach Anspruch 5 sowie einem der Ansprüche 1 bis 13, **dadurch gekennzeichnet, daß** die Bremslösehilfsleitung (46) ein Rückschlagventil (47) umfaßt, das lediglich die Zirkulation des Fluids in der Hinrichtung der zweiten Bremslösefluidquelle (48) in Richtung der Bremslösekammer (36) zuläßt.

15. Kreis nach einem der Ansprüche 1 bis 14, **dadurch gekennzeichnet, daß** das Kurzschluß- und Auswahlventil (44) einen Rückweg (40A) aufweist, der mit einem drucklosen Behälter (28) verbunden ist, und daß in der zweiten Konfiguration (44B) des Ventils die Hauptwege (12A, 14A) mit dem Rückweg (40A) verbunden sind.

16. Kreis nach Anspruch 15, **dadurch gekennzeichnet, daß** der Rückweg (40A) mit einer Leckrückleitung (11) des Hydraulikmotors (10) verbunden ist, die selbst mit dem drucklosen Behälter (28) verbunden ist.
